# EUROPÄISCHE PATENTSCHRIFT

(11) **EP 3 581 360 B1**
(45) Veröffentlichungstag und Bekanntmachung des Hinweises auf die Patenterteilung: **10.08.2022**
(21) Anmeldenummer: 18177425.8
(22) Anmeldetag: 12.06.2018
(51) Int. Cl.: B29C 45/40, B29C 45/43, B29C 45/17

(54) **SPRITZGIESSWERKZEUG**
INJECTION MOULDING TOOL
OUTIL DE MOULAGE PAR INJECTION

(43) Veröffentlichungstag der Anmeldung: 18.12.2019
(73) Patentinhaber: Haidlmair Holding GmbH, 4542 Nussbach (AT)
(72) Erfinder: Mayrhofer, Alfred Markus, 4621 Sipbachzell (AT)
(74) Vertreter: Jell, Friedrich

(56) Entgegenhaltungen:
- DE-A1- 19 720 382
- DE-B- 1 133 111
- ES-A1- 2 348 901
- JP-A- S5 968 220
- JP-A- S51 100 154
- JP-A- 2000 079 627
- JP-A- 2002 187 153
- JP-A- 2012 200 882
- JP-U- H 063 615
- JP-U- S5 351 467

## Beschreibung

Die Erfindung betrifft ein Spritzgießwerkzeug mit zwei Werkzeughälften, die zwischen einander mindestens eine Kavität für wenigstens ein Spritzgussteil ausbilden, wobei die erste mehrteilig aufgebaute Werkzeughälfte mindestens einen Auswerfer, eine an die Kavität angrenzende Formplatte und mindestens ein weiteres Teil aufweist, wobei der Auswerfer einen Antrieb und ein mit dem Antrieb zu dessen Bewegung gekoppeltes Auswerferelement aufweist, das in der ersten Werkzeughälfte begrenzt beweglich, insbesondere begrenzt verschiebbar, gelagert ist.

Spritzgießwerkzeuge mit mechanischem Auswerfer, welche mit begrenzt beweglichem, nämlich begrenzt verschiebbarem, Auswerferelement ein Spritzgussteil aus dem geöffneten Spritzgusswerkzeug hinausdrängen, sind beispielsweise aus der EP 1 308 260 A1 bekannt. Solch ein Auswerferelement und der Antrieb des Auswerfers sind in einer ersten Werkzeughälfte vorgesehen, welche mit einer Formplatt an eine Kavität des Spritzgießwerkzeugs zur Ausbildung des Spritzgussteils angrenzt. Das Auswerferelement unterliegen allerdings einem erhöhten Verschleiß - hinzu kommt, dass eine Wartung meist eines relativ aufwendigen Auseinandernehmens der mehrteiligen Werkzeughälfte bedarf.

Die JP 2000 079627 A offenbart ein Spritzgießwerkzeug mit einem Auswerferelement, das mit einem Antrieb gekoppelt ist. Die JP 2000 079627 A offenbart zudem die Merkmale des Oberbegriffes des Anspruchs 1.

Aus der JP S5 1100154 A ist ein Spritzgießwerkzeug mit einem Auswerferelement mit kombinierter Druckluftunterstützung und Gaskanal in der Formplatte bekannt. Die JP S53 51467 U offenbart ein Spritzgießwerkzeug mit einem Auswerferelement mit kombinierter Druckluftbetätigung und Druckluftunterstützung. Aus der JP S59 68220 A ist ein Spritzgießwerkzeug mit einem Auswerferelement bekannt, welches mit einem Antrieb gekoppelt ist, der in einer Auswerferplatte angeordnet ist.

Die Erfindung hat sich daher die Aufgabe gestellt, die Konstruktion eines eingangs geschilderten Spritzgusswerkzeugs im Bereich des Auswerfers derart zu verändern, dass Wartungsarbeiten einfach durchführbar sind.

Die Erfindung löst die gestellte Aufgabe durch die Merkmale des Anspruchs 1.

Ist das Auswerferelement an der Formplatte begrenzt beweglich gelagert und ist der Antrieb am weiteren Teil der ersten Werkzeughälfte befestigt, kann über eine Demontage der Formplatte von der ersten Werkzeughälfte das Auswerferelement vergleichsweise einfach zugänglich werden bzw. zu Wartungszwecken von der Werkzeughälfte abgenommen werden. Erfindungsgemäß ist es damit möglich, die anderen Teile des Auswerfers am Spritzgusswerkzeug zu belassen - was die Wartung erheblich vereinfacht.

Vorstehende Vorteile sind weiter verbessert, wenn Antrieb und Auswerferelement lose miteinander verbunden sind. Auf diese Weise kann die Formplatte ohne irgendwelche zusätzlichen Handhabungsschritte beispielsweise zum Öffnen der Verbindung zwischen Antrieb und Auswerferelement von der ersten Werkzeughälfte abgenommen werden. Das erfindungsgemäße Formwerkzeug lässt sich daher besonders einfach warten - was nicht zuletzt auch die Standzeit des Spritzgusswerkzeugs erhöhen kann.

Vereinfachte Konstruktionsverhältnisse am Spritzgusswerkzeug können sich ergeben, wenn der Antrieb einen Zylinder aufweist, dessen Kolben mit dem Auswerferelement lose verbunden ist. Vorzugsweise handelt es sich beim Zylinder um einen Pneumatikzylinder.

Weist der Kolben eine Kolbenstange auf, die an das Auswerferelement anschließt, kann der Antrieb von der Kavität räumlich weiter entfernt in der ersten Werkzeughälfte vorgesehen werden. Dies entlastet den Antrieb gegenüber den, von der Kavität ausgehenden Temperaturen - was wiederum die Standfestigkeit des Auswerfers erhöhen kann.

Eine lose Verbindung kann auf konstruktiv einfach gelöst werden, wenn Antrieb und Auswerferelement über einen stumpfen Stoß lose miteinander verbunden sind. Vorzugsweise schließen Antrieb und Auswerferelement über einen stumpfen Stoß aneinander an.

Wie aus der JP 2000 079627 A bekannt, ist die Konstruktion der ersten Werkzeughälfte vereinfacht, da das Auswerferelement einen Auswerferteller, einen an den Auswerferteller anschließenden Auswerferschaft und eine Rückstellfeder aufweist. Da zudem die Formplatte einen an die Kavität anschließenden Sitz ausbildet, wobei die Rückstellfeder den Auswerferteller gegen den Sitz an der Formplatte federbelastet, kann ein besonders dichter Abschluss der Kavität durch das Auswerferelement erreicht und damit ein formgenaues Spritzgussteil hergestellt werden.

Greift die Rückstellfeder an den Auswerferschaft und an die Formplatte an, um diese gegeneinander zu verspannen, kann die Formplatte mit Teilen des Auswerfers eine Baueinheit ausbilden. Dies ist es möglich, dass sich die Handhabung des Spritzgusswerkzeugs bei der Wartung weiter erleichtern, da diese Baueinheit unabhängig von der konstruktiven Ausführung des Auswerfers von der ersten Werkzeughälfte abnehmbar ist.

Das Spritzgusswerkzeug kann in seiner Standfestigkeit weiter erhöht werden. Erfindungsgemäß ist, dass dazu die Formplatte einen Gaskanal und einen Führungskanal aufweist, welcher Führungskanal den Sitz ausbildet und das Auswerferelement führt, wobei der Gaskanal in den Führungskanal einmündet. Mit Hilfe eines den Gaskanal durchströmenden Gases kann nämlich der Führungskanal für das Auswerferelement zusätzlich auch gereinigt werden - was zwischen Formplatte und Auswerferelement einen passgenauen Sitz gewährleistet. Des Weiteren ist es möglich, dass dieses Gas auch bei der Entformung des Spritzgussteils beiträgt, was wiederum die Funktionalität des Auswerfers erweitern kann.

Vorzugsweise mündet der Gaskanal in einen Abschnitt des Führungskanals ein, welcher Abschnitt sich zum Sitz hin erweitert, um diesen Bereich zur Sicherstellung der Passgenauigkeit zwischen Formplatte und Auswerferelement besonders rein halten zu können.

In den Figuren ist beispielsweise der Erfindungsgegenstand anhand einer Ausführungsvariante näher dargestellt. Es zeigen
Fig. 1 eine Schnittansicht zu einem teilweise dargestellten Spritzgusswerkzeug und
Fig. 2 eine vergrößerte Teildarstellung des Spritzgusswerkzeugs nach Fig. 1 mit dem Auswerfer in Auswerflage.

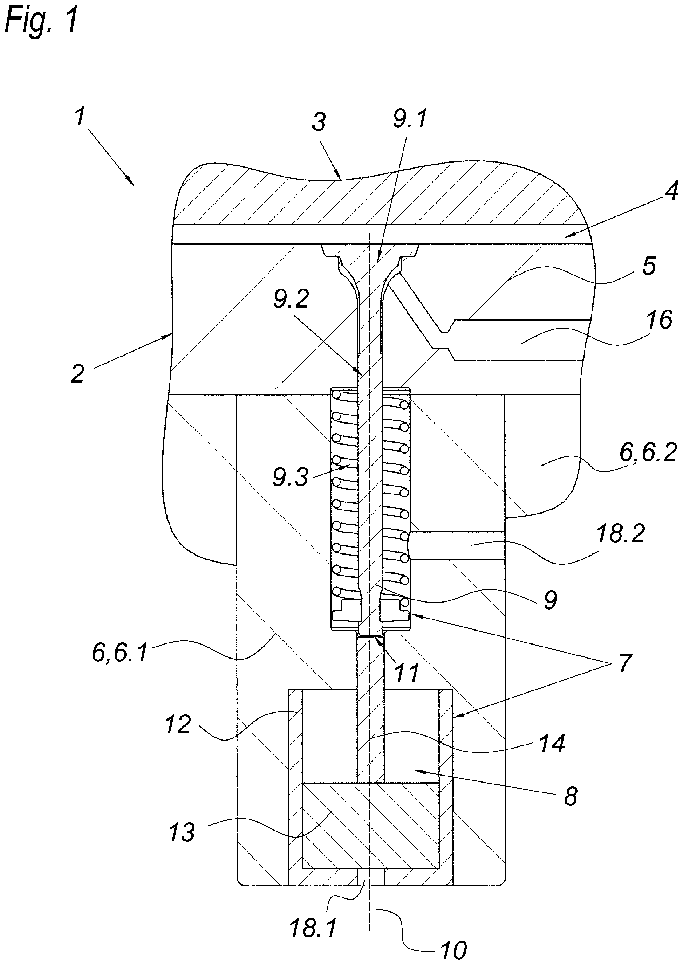

Nach Fig. 1 wird ein Spritzgießwerkzeug 1 teilweise dargestellt, in welcher Darstellung zwei Werkzeughälften 2, 3 abgerissen zu erkennen sind. Die beiden Werkzeughälften 2, 3 bilden zwischen einander eine Kavität 4 für ein nicht weiter dargestelltes Spritzgussteil.

Die erste Werkzeughälfte 2 ist mehrteilig aufgebaut und vorzugsweise örtlich feststehend. Sie weist eine Formplatte 5 und mindestens einen weiteren Teil 6 auf, welcher weitere Teil 6 beispielsweise ein Halter 6,1, eine weitere Platte 6.2, Zwischenplatte, Aufspannplatte etc. darstellen kann. Die erste Werkzeughälfte 2 umfasst zudem einen Auswerfer 7 zum Auswerfen des Spritzgussteils beim Öffnen des Spritzgießwerkzeugs 1.

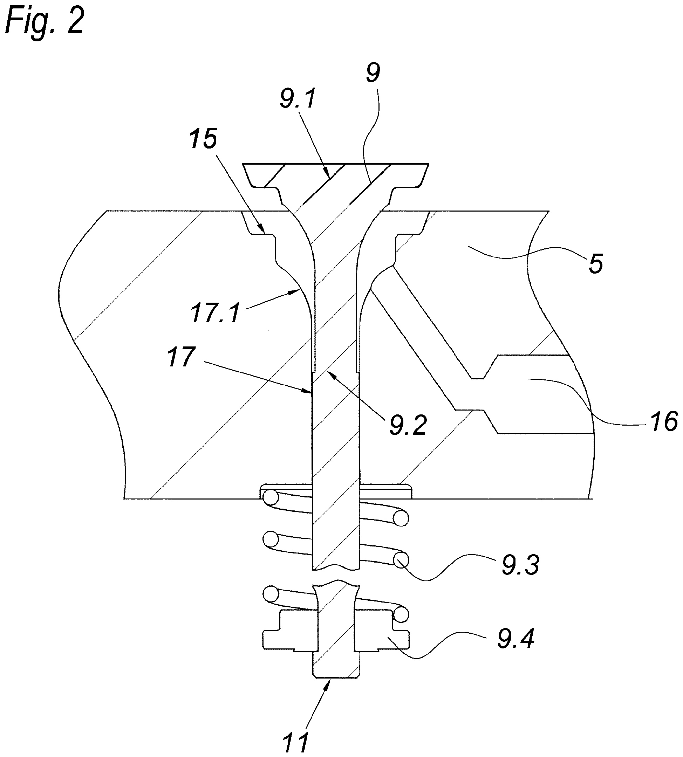

Der Auswerfer 7 umfasst einen - im Ausführungsbeispiel linearen - Antrieb 8 und einem Auswerferelement 9, das in der ersten Werkzeughälfte 2 begrenzt verschiebbar, gelagert ist. Die Verschiebebewegung wird vom linearen Antrieb 8 erzeugt, mit dem das Auswerferelement 9 zu dessen Bewegung entlang der Bewegungsachse 10 gekoppelt ist. Auf diese Weise wird das Auswerferelement 9 von einer mit der Formplatte 5 planen Ruhelage in eine der Formplatte 5 vorspringenden Auswerflage bewegt, welche Ruhelage in Fig. 1 und welche Auswerflage in der Fig. 2 erkannt werden kann.

Das Auswerferelement 8 ist an der Formplatte 5 begrenzt beweglich gelagert. Der Antrieb 6 ist an einem weiteren Teil 6 der ersten Werkzeughälfte 2 - nämlich über eine Halter 6.1 an der weiteren Platte 6.2, vorzugsweise Aufspannplatte 6.2, befestigt. Damit bilden die Formplatte 5 und Teile des Auswerfers 7 eine Baueinheit, welche von der ersten Werkzeughälfte 2 abgenommen werden kann, ohne den Auswerfer 7 hierfür zuvor auseinander nehmen zu müssen. Die Handhabung des Spritzgusswerkzeugs 1 bei dessen Wartung erleichtert sich auf diese Weise erheblich. Dies insbesondere da-durch, indem Antrieb 8 und Auswerferelement 9 lose miteinander verbunden sind - wie dies in Fig. 1 anhand eines stumpfen Stoßes 11 zwischen Antrieb 8 und Auswerferelement 9 zu erkennen ist.

Der Antrieb 8 weist einen pneumatischen Zylinder 12 mit einem Kolben 13 auf. Der Zylinder 12 ist einfachwirkend über eine Zufuhrgasleitung 18.1 zu betätigen. Vorstellbar ist natürlich auch eine zweifachwirkende Ausführung des Zylinders unter zusätzlicher Betätigung durch Zufuhrgasleitung 18.1.

Über die Bewegung des Kolbens 13 wird das Auswerferelement 9 von der Ruhelage in die Auswerflage bewegt. Der Kolben 13 ist mit dem Auswerferelement 9 lose verbunden und zwar über eine Kolbenstange 14, welche an den Kolben 13 anschließt. Zwischen der Kolbenstange 14 und dem Auswerferelement 9 befindet sich der stumpfe Stoß 11.

Das Auswerferelement 9 ist besonders robust und kompakt aufgebaut, und weist hierfür einen Auswerferteller 9.1, einen an das Auswerferteller 9.1 anschließenden Auswerferschaft 9.2 und eine Rückstellfeder 9.3 auf.

Die Formplatte 5 bildet einen an die Kavität 4 anschließenden Sitz 15 aus, an welchen das Auswerferteller 9.1 in dessen Ruhelage dicht anliegt. Hierzu belastet die Ruckstellfeder 9.3 das Auswerferteller gegen den Sitz 15 an der Formplatte 5, indem die - im dargestellten Ausführungsbeispiel als Schraubendruckfeder ausgeführte - Ruckstellfeder 9.3 an den Auswerferschaft 9.2, und zwar über einen Federhalter 9.4 des Auswerferelements 9, und an die Formplatte 5 angreift, um diese gegeneinander zu verspannen.

Zudem ist in der Formplatte 5 einen Gaskanal 16 vorgesehen, der in den Führungskanal 17 der Formplatte 5 mündet, welcher Führungskanal 17 das Auswerferelement 9 beispielsweise linear führt. Und zwar mündet der Gaskanal 16 in einen Abschnitt 17.1 des Führungskanals 17 ein, welcher Abschnitt 17.1 sich zum Sitz 15 hin erweitert. Derart ist eine hohe Durchfußmenge an Gas zugelassen bzw. eine hohe Reinigungswirkung ermöglicht.

## Patentansprüche

1. Spritzgießwerkzeug mit zwei Werkzeughälften (2, 3), die zwischen einander mindestens eine Kavität (4) für wenigstens ein Spritzgussteil ausbilden, wobei die erste mehrteilig aufgebaute Werkzeughälfte (2) mindestens einen Auswerfer (7), eine an die Kavität (4) angrenzende Formplatte (5) und mindestens ein weiteres Teil (6) aufweist, wobei der Auswerfer (7) einen Antrieb (8) und ein mit dem Antrieb (8) zu dessen Bewegung gekoppeltes Auswerferelement (9) aufweist, das in der ersten Werkzeughälfte (2) begrenzt beweglich, insbesondere begrenzt verschiebbar, gelagert ist, wobei das Auswerferelement (9) einen Auswerferteller (9.1), einen an den Auswerferteller (9.1) anschließenden Auswerferschaft (9.2) und eine Rückstellfeder (9.3) aufweist, wobei die Formplatte (5) einen an die Kavität (4) anschließenden Sitz (15) ausbildet, wobei die Rückstellfeder (9.3) den Auswerferteller (9.1) gegen den Sitz (15) der Formplatte (5) für einen dichten Abschluss der Kavität (4) durch das Auswerferelement (9) federbelastet, wobei das Auswerferelement (9) an der Formplatte (5) begrenzt beweglich gelagert ist und der Antrieb (8) am weiteren Teil (6) der ersten Werkzeughälfte (2) befestigt ist, wobei Antrieb (8) und Auswerferelement (9) lose miteinander verbunden sind, **dadurch gekennzeichnet, dass** die Formplatte (5) einen Gaskanal (16) und einen Führungskanal (17) aufweist, welcher Führungskanal (17) den Sitz ausbildet und das Auswerferelement (9) führt, wobei der Gaskanal (16) in den Führungskanal (17) einmündet.

2. Spritzgießwerkzeug nach Anspruch 1, **dadurch gekennzeichnet, dass** der Antrieb (8) einen Zylinder (12) aufweist, dessen Kolben (13) mit dem Auswerferelement (9) lose verbunden ist.

3. Spritzgießwerkzeug nach Anspruch 2, **dadurch gekennzeichnet, dass** der Kolben (13) eine Kolbenstange (14) aufweist, die an das Auswerferelement (9) anschließt.

4. Spritzgießwerkzeug nach Anspruch 1, 2 oder 3, **dadurch gekennzeichnet, dass** Antrieb (8) und Auswerferelement (9) über einen stumpfen Stoß (11) lose miteinander verbunden sind.

5. Spritzgießwerkzeug nach Anspruch 1, **dadurch gekennzeichnet, dass** die Rückstellfeder (9.3) an den Auswerferschaft (9.2) und an die Formplatte (5) angreift, um diese gegeneinander zu verspannen.

6. Spritzgießwerkzeug nach Anspruch 1, **dadurch gekennzeichnet, dass** der Gaskanal (16) in einen Abschnitt (17.1) des Führungskanals (17) einmündet, welcher Abschnitt (17.1) sich zum Sitz (15) hin erweitert.

## Claims

1. Injection molding tool, having two mold halves (2, 3) which form between them at least one cavity (4) for at least one injection-molded part, wherein the first mold half (2), which is constructed in several parts, has at least one ejector (7), a mold plate (5) adjoining the cavity (4) and at least one further part (6), wherein the ejector (7) has a drive (8) and an ejector element (9) which is coupled to the drive (8) for the movement thereof and which is mounted in the first mold half (2) so as to be movable to a limited extent, more particularly displaceable to a limited extent, wherein the ejector element (9) has an ejector plate (9.1), an ejector shaft (9.2) adjoining the ejector plate (9.1) and a return spring (9. 3), wherein the mold plate (5) forms a seat (15) adjoining the cavity (4), wherein the return spring (9.3) spring-loads the ejector plate (9.1) against the seat (15) of the mold plate (5) for tight closure of the cavity (4) by the ejector element (9), wherein the ejector element (9) is mounted on the mold plate (5) so as to be movable to a limited extent and the drive (8) is fastened to the further part (6) of the first mold half (2), wherein the drive (8) and ejector element (9) are loosely connected to one another, **characterized in that** the mold plate (5) has a gas channel (16) and a guide channel (17), which guide channel (17) forms the seat and guides the ejector element (9), wherein the gas channel (16) opens into the guide channel (17).

2. Injection molding tool according to claim 1, **characterized in that** the drive (8) has a cylinder (12) whose piston (13) is loosely connected to the ejector element (9).

3. Injection molding tool according to claim 2, **characterized in that** the piston (13) has a piston rod (14) that adjoins the ejector element (9).

4. Injection molding tool according to claim 1, 2 or 3, **characterized in that** the drive (8) and the ejector element (9) are loosely connected to each other via a butt joint (11).

5. Injection molding tool according to claim 1, **characterized in that** the return spring (9.3) engages the ejector shaft (9.2) and the mold plate (5) in order to clamp them against each other.

6. Injection molding tool according to claim 1, **characterized in that** the gas channel (16) opens into a section (17.1) of the guide channel (17), which section (17.1) widens towards the seat (15).

## Revendications

1. Outil de moulage par injection avec deux moitiés d'outil (2, 3) qui forment entre elles au moins une cavité (4) pour au moins une pièce moulée par injection, la première moitié d'outil (2) constituée de plusieurs parties présentant au moins un éjecteur (7), une plaque de moulage (5) adjacente à la cavité (4) et au moins une autre partie (6), l'éjecteur (7) présentant un entraînement (8) et un élément d'éjection (9) accouplé à l'entraînement (8) pour son déplacement, qui est monté dans la première moitié d'outil (2) avec une possibilité de déplacement limitée, en particulier avec une possibilité de coulissement limitée, l'élément d'éjection (9) présentant un plateau d'éjection (9.1), une tige d'éjection (9.2) se raccordant au plateau d'éjection (9.1) et un ressort de rappel (9.3), la plaque de moulage (5) formant un siège (15) se raccordant à la cavité (4), le ressort de rappel (9.3) sollicitant par ressort le plateau d'éjection (9.1) contre le siège (15) de la plaque de moulage (5) pour une fermeture étanche de la cavité (4) par l'élément d'éjection (9), l'élément d'éjection (9) étant monté avec une possibilité de déplacement limitée sur la plaque de moulage (5) et l'entraînement (8) étant fixé sur l'autre partie (6) de la première moitié d'outil (2), l'entraînement (8) et l'élément d'éjection (9) étant reliés l'un à l'autre de manière lâche, **caractérisé en ce que** la plaque de moulage (5) présente un canal de gaz (16) et un canal de guidage (17), lequel canal de guidage (17) forme le siège et guide l'élément d'éjection (9), le canal de gaz (16) débouchant dans le canal de guidage (17).

2. Outil de moulage par injection selon la revendication 1, **caractérisé en ce que** l'entraînement (8) présente un vérin (12) dont le piston (13) est relié de manière lâche à l'élément d'éjection (9).

3. Outil de moulage par injection selon la revendication 2, **caractérisé en ce que** le piston (13) présente une tige de piston (14) qui se raccorde à l'élément d'éjection (9).

4. Outil de moulage par injection selon la revendication 1, 2 ou 3, **caractérisé en ce que** l'entraînement (8) et l'élément d'éjection (9) sont reliés l'un à l'autre de manière lâche par un joint bout à bout (11).

5. Outil de moulage par injection selon la revendication 1, **caractérisé en ce que** le ressort de rappel (9.3) agit sur la tige d'éjection (9.2) et sur la plaque de moulage (5) afin de les serrer l'une contre l'autre.

6. Outil de moulage par injection selon la revendication 1, **caractérisé en ce que** le canal de gaz (16) débouche dans une portion (17.1) du canal de guidage (17), laquelle portion (17.1) s'élargit en direction du siège (15).
